# EUROPEAN PATENT SPECIFICATION

(11) **EP 3 432 134 B1**
(45) Date of publication and mention of the grant of the patent: **10.05.2023**
(21) Application number: 18184094.3
(22) Date of filing: 18.07.2018
(51) Int. Cl.: G06F 3/12

(54) **PRINTER AND METHOD OF CONTROLLING PRINTER**
DRUCKER UND VERFAHREN ZUR STEUERUNG DES DRUCKERS
IMPRIMANTE ET PROCÉDÉ DE CONTRÔLE D'IMPRIMANTE

(30) Priority: 19.07.2017 JP 2017140262
(43) Date of publication of application: 23.01.2019
(73) Proprietor: Toshiba TEC Kabushiki Kaisha, Tokyo 141-8562 (JP)
(72) Inventor: NAKATAKE, Shinji, Shinagawa-ku,, Tokyo 141-8562 (JP)
(74) Representative: Bandpay & Greuter

(56) References cited:
- EP-A2- 2 845 739
- JP-A- 2009 064 280
- US-A1- 2014 320 896

## Description

### FIELD

An embodiment described here generally relates to a printer and a method of controlling the printer.

### BACKGROUND

In a store, the product name, the price, the expiration date, and the like of a product are printed on a label, and the label is attached to the product. When printing the above-mentioned label, a label printer displays a label to be printed on a display device to cause an operator to check whether or not the print content is correct. The operator of the label printer checks whether or not the content of print items is correct by checking the above-mentioned displayed content.

JP2009 064280A discloses a label information control system and label information control server to properly control label information and to easily and exactly execute education about display of the label information.

When performing the checking, even in the case where the difference from the label printed last time is small, e.g., the label of the same product is to be printed again, the operator of the label printer needs to check all print items again. For this reason, there is a problem that the operator takes time and effort for the checking.

### SUMMARY OF INVENTION

To solve such problem, there is provided a printer that performs printing on a printable medium to be attached to a product, according claim 1.

Preferably, the controller records, where the print data is generated for the first time for the product identified by the identification information, the generated print data in the memory.

Preferably still, the controller records, where no print data is recorded in the memory in association with the input identification information, the generated print data in the memory.

Preferably yet, the controller records, for the product identified by the identification information, the print data that is generated most recently.

Suitably, the controller records, where the controller detects the attribution item that differs between the generated print data and the print data that is recorded in the memory in association with the input identification information, the generated print data in the memory.

Suitably still, the controller further detects the attribution item that differs by comparing data of the attribution item of the generated print data and data of the attribution item of the print data that is recorded in the memory.

Suitably yet, the controller performs, where no print data is recorded in the memory in association with the input identification information, notification that the print data is generated for the first time.

Typically, the controller displays, where no print data is recorded in the memory in association with the input identification information, a message and the print image on the display, the message representing that the print data is generated for the first time.

Typically still, the controller displays, where the controller detects an attribution item that differs between the generated print data and the print data that is recorded in the memory in association with the input identification information, a message and the print image on the display, the message representing that there is the difference in the attribution item.

The invention also relates to a method of controlling a printer that includes an interface that inputs identification information identifying the product, according to claim 10.

The invention further relates to a non-transitory computer readable medium according to claim 11.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an outside view of a label printer system of an embodiment.
Fig. 2 is a hardware block diagram showing an example of a hardware configuration of the label printer of this embodiment.
Fig. 3 is a hardware block diagram showing an example of a hardware configuration of a store-server of this embodiment.
Fig. 4 is a functional block diagram showing an example of a functional configuration of the label printer of this embodiment.
Fig. 5 is a diagram showing an example of a configuration of text data among print data of the label printer of this embodiment.
Fig. 6 is a diagram showing an example of a configuration of layout data among the print data of this embodiment.
Fig. 7A is a diagram showing a display example displayed, before printing a label, on a display of the label printer of this embodiment.
Fig. 7B is a diagram showing a display example displayed, before printing a label, on a display of the label printer of this embodiment.
Fig. 8 is a flowchart showing an example of the process that the label printer of this embodiment executes.

### DETAILED DESCRIPTION

According to an embodiment not according to the invention and present for illustration purposes only, a printer performs printing on a printable medium to be attached to a product. The printer includes: an interface; a memory; a printer mechanism; a display; and a controller. The interface inputs identification information identifying the product. The memory records a product information file that records, for each piece of the identification information, product information including a plurality of pieces of data of a plurality of attribution items each representing an attribution of the product, the memory recording print data in association with the identification information, the plurality of pieces of data of the plurality of attribution items being arranged at predetermined positions in the print data. The printer mechanism prints the product information of the product identified by the input identification information, on the printable medium on the basis of the print data. The display displays a print image of the printable medium where the product information is to be printed by the printer mechanism. The controller reads, where the identification information is input via the interface, the product information from the product information file in the memory on the basis of the identification information. The controller generates print data in which the plurality of pieces of data included in the read product information are arranged at predetermined positions. The controller detects an attribution item that differs between the generated print data and the print data that is recorded in the memory in association with the input identification information. The controller displays the print image on the display on the basis of the generated print data in such a way that the detected attribution item is highlighted.

Hereinafter, an embodiment will be described with reference to the drawings. In the drawings, the same reference symbols show the same or similar units.

### (Description of Schematic Configuration of Label Printer System)

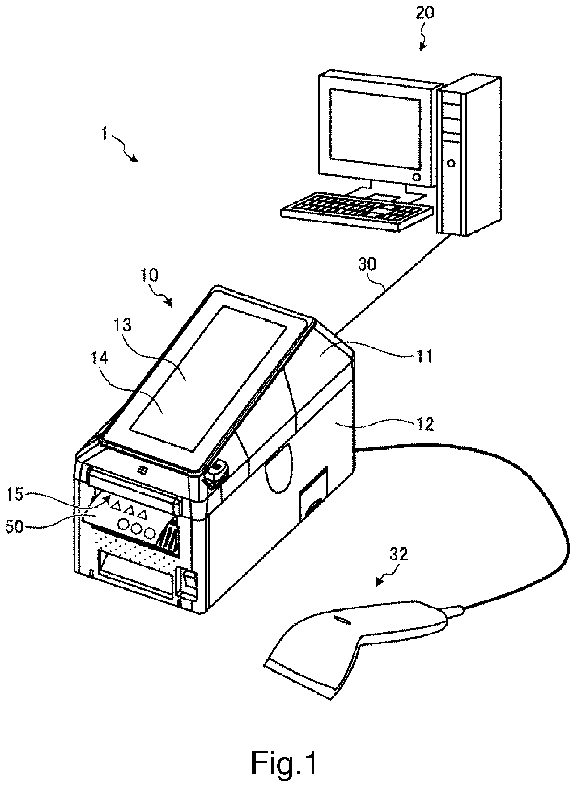

A label printer according to an embodiment will be described first with reference to the drawings. Fig. 1 is an outside view showing a schematic configuration of a label printer system. The label printer system of this embodiment described below prints product information and the like on a label sheet and issues a label to be attached to a product. A label printer system 1 includes a label printer 10 and a store-server 20. The label printer 10 is connected to the store-server 20 via the network 30. The network 30 is, for example, a wired or wireless in-store LAN (Local Area Network). Further, the label printer system 1 of Fig. 1 includes the one label printer 10 and the one store-server 20. Alternatively, the label printer system 1 may include label printers 10 and store-servers 20. Further, the label printer system 1 may include one label printer 10 and store-servers 20, or label printers 10 and one store-server 20.

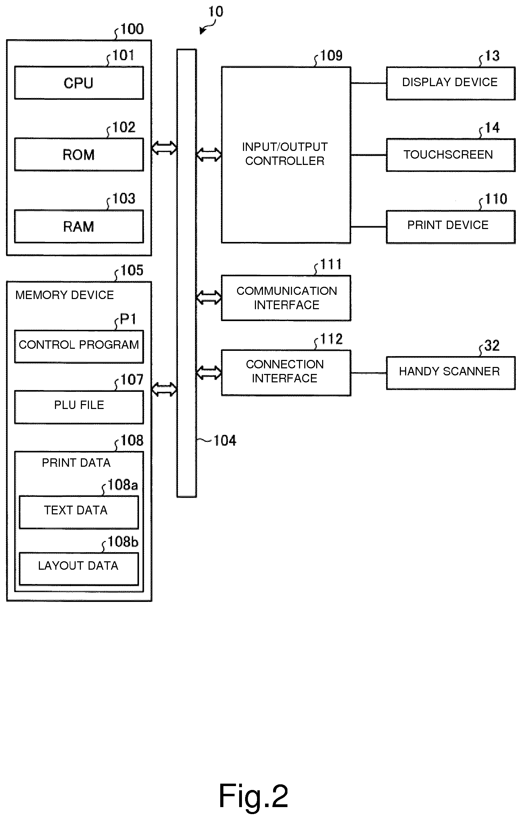

The label printer 10 is a printer that performs printing for issuing a label 50. The label 50 is a medium, such as a paper, on which product information (to be described later) is printed and is attached to the product in order to represent the product information. The label printer 10 prints information and the like of the product on the label sheet and issues the label 50. Hereinafter, printing information of the product and the like on the label sheet and issuing the label 50 will be referred to simply as printing of the label 50 in some cases. The label printer 10 includes a display device 13. Further, the label printer 10 includes a top cover 11 and a main cover 12. The display device 13 is provided on the top cover 11. The display device 13 is, for example, a liquid crystal display or the like and a touchscreen 14 is layered. The top cover 11 is provided on the main cover 12 and is opened/closed. The main cover 12 includes an accommodation device (not shown) that accommodates a rolled label sheet. For example, when the top cover 11 is open, the accommodation device of the main cover 12 is exposed. The operator is capable of supplying label sheets to the accommodation device by opening the top cover 11. The label sheet is obtained by attaching a plurality of labels 50 to a strip-shaped sheet, for example. Further, the label printer 10 includes a print device 110 (see Fig. 2). The print device 110 is a printer mechanism that prints product information and the like on a label sheet. The print device 110 is provided in the main cover 12. Further, the label printer 10 includes a label issue slot 15. The label issue slot 15 is provided between the top cover 11 and the main cover 12. The label issue slot 15 dispenses the label 50, on which product information and the like is printed by the print device 110, and thereby issues the label 50.

Further, the label printer 10 includes a handy scanner 32. The handy scanner 32 is connected to the label printer 10. The handy scanner 32 reads a code symbol (e.g., barcode) attached to a product to which the label 50 is to be attached. The code symbol includes a product code and the like. The product code is identification information uniquely identifying a product.

The label printer 10 includes a PLU file 107 (see Fig. 2). As will be described later, the PLU file 107 records product information in association with a product code. The label printer 10 reads, from the PLU file 107, product information of the product corresponding to the product code included in the barcode read by the handy scanner 32. The label printer 10 arranges the read product information or the like on a predetermined format set in advance, and generates print data for the label 50.

As described above, the label 50 is a printable medium on which product information of a product to which the label 50 is to be attached is printed. The product information includes, for example, information on the product name, the product price, the manufacturing date, the best-before date, the expiration date, the production area, and the like. Note that a specific example of the label 50 will be described later.

### (Description of Hardware Configuration of Label Printer)

Next, a hardware configuration of the label printer 10 of the label printer system 1 will be described. Fig. 2 is a block diagram showing an example of a hardware configuration of the label printer 10. The label printer 10 includes a controller 100 for controlling the respective units. The controller 100 includes a processor and a memory. The processor is, for example, a CPU (Central Processing Unit) 101. The memory is, for example, a ROM (Read Only Memory) 102 and a RAM (Random Access Memory) 103. The CPU 101 is connected to the ROM 102 and the RAM 103 via a bus line 104 including an address bus, a data bus, and the like. The CPU 101 decompresses various programs, which are recorded in the ROM 102 and a memory device 105, in the RAM 103. The CPU 101 operates according to the various programs decompressed in the RAM 103, and thereby controls the respective units of the label printer 10. In other words, the controller 100 has a configuration of a general-purpose computer.

Further, the label printer 10 includes the memory device 105, an input/output controller 109, a communication interface 111, and a connection interface 112. The controller 100 is connected to the memory device 105, the input/output controller 109, the communication interface 111, and the connection interface 112 via the bus line 104.

The memory device 105 is a nonvolatile memory that holds information even after power-off, such as a flash memory. The memory device 105 records programs including a control program P1, and the like. The control program P1 is a program for realizing the functions of the label printer 10. Further, the memory device 105 records the PLU (Price Look Up) file 107, and print data 108.

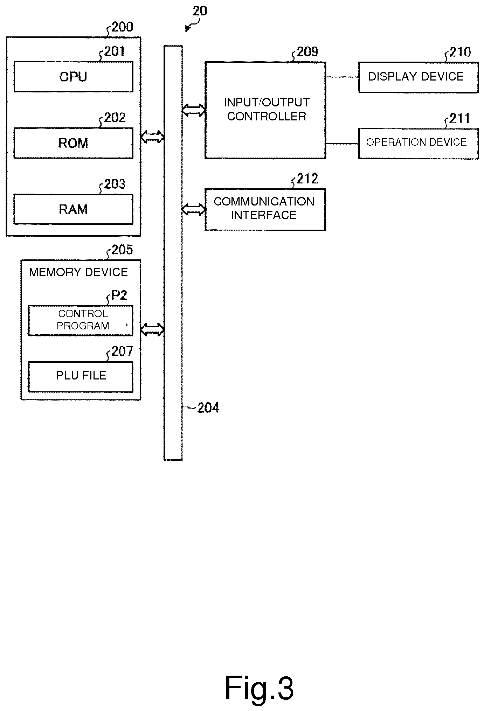

The PLU file 107 records, for each product code, product information on the product corresponding to the product code. The PLU file 107 is one to which a PLU file 207 (see Fog. 3) recorded in a memory device 205 (see Fig. 3) of the store-server 20 is transmitted at predetermined timing. As described above, the product information includes information on the product name, the product price, the manufacturing date, the best-before date, the expiration date, the production area, and the like. Note that the product information of the PLU file 107 is updated every time the product information of the same product code is received from the store-server 20. In other words, the product information recorded in the PLU file 107 is the newest product information received from the store-server 20.

The print data 108 is print data for the label 50 printed in the past by the label printer 10. The print data 108 includes text data 108a and layout data 108b. The detailed configuration of the print data 108 will be described later.

The input/output controller 109 is connected to the display device 13, the touchscreen 14, and the print device 110. The input/output controller 109 controls the display device 13, the touchscreen 14, and the print device 110 connected thereto on the basis of a command from the controller 100.

The print device 110 includes a platen roller and a print head (which are not shown). The platen roller rotates, thereby pulls the label sheet out of the above-mentioned accommodation device (not shown), and feeds the label sheet. The print head is, for example, a thermal head. The print head performs printing on the label sheet fed by the platen roller.

The communication interface 111 is an interface for communicating with the store-server 20 via the network 30 such as an in-store LAN (see Fig. 1).

The connection interface 112 is an interface for connecting to an external device. For example, to the connection interface 112, the handy scanner 32 is connected.

### (Description of Hardware Configuration of Store-server)

Next, a hardware configuration of the store-server 20 will be described. Fig. 3 is a block diagram showing an example of a hardware configuration of the store-server 20. The store-server 20 includes a controller 200 that controls the respective units. The controller 200 includes a processor and a memory. The processor is, for example, a CPU (Central Processing Unit) 201. The memory is, for example, a ROM (Read Only Memory) 202 and a RAM (Random Access Memory) 203. The CPU 201 is connected to the ROM 202 and the RAM 203 via a bus line 204 including an address bus, a data bus, and the like. The CPU 201 decompresses various programs, which are recorded in the ROM 202 and the memory device 205, in the RAM 203. The CPU 201 operates according to the various programs decompressed in the RAM 203, and thereby controls the store-server 20. In other words, the controller 200 has a configuration of a general-purpose computer.

Further, the store-server 20 includes the memory device 205, an input/output controller 209, and a communication interface 212. The controller 200 is connected to the memory device 205, the input/output controller 209, and the communication interface 212 via the bus line 204.

The memory device 205 is a memory such as an HDD (Hard Disk Drive) or an SSD (Solid State Drive). The memory device 205 may be a nonvolatile memory that holds information even after power-off, such as a flash memory. The memory device 205 records programs including a control program P2, and the like. The control program P2 is a program for realizing the functions of the store-server 20. Further, the memory device 205 records the PLU file 207.

The PLU file 207 is transmitted to each system such as the label printer system 1, device, or the like. Therefore, when the price of a product is changed or when a sale or the like is held, a manager of a store or the like edits the PLU file 207 of the store-server 20. In other words, the memory device 205 records the newest PLU file 207.

Further, the store-server 20 includes a display device 210 and an operation device 211. The input/output controller 209 is connected to the display device 210 and the operation device 211. The input/output controller 209 controls the display device 210 and the operation device 211 connected thereto on the basis of commands from the controller 200.

The display device 210 is, for example, a liquid crystal display (LCD). Note that the display device 210 may not be a liquid crystal display device but may be an organic EL (Electro Luminescence) display or another display. The operation device 211 includes a keyboard, a mouse, and/or other operation devices.

The communication interface 212 is an interface for communicating with the label printer 10 via the network 30 such as an in-store LAN (see Fig. 1).

### (Description of Functional Configuration of Label Printer)

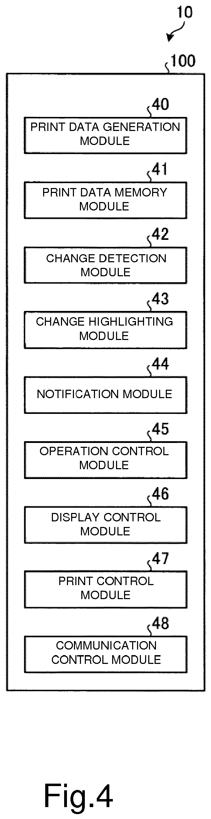

Next, a functional configuration of the label printer 10 will be described with reference to Fig. 4. Fig. 4 is a functional block diagram showing an example of a functional configuration of the label printer 10. As shown in Fig. 4, the controller 100 of the label printer 10 decompresses the control program P1 (see Fig. 2) in the RAM 103, executes the control program P1, and thereby operates as a print data generation module 40, a print data memory module 41, a change detection module 42, a change highlighting module 43, an notification module 44, an operation control module 45, a display control module 46, a print control module 47, and a communication control module 48.

The print data generation module 40 acquires product information to be printed on the label 50 under the condition that an operation of requesting printing the label 50 is accepted. The print data generation module 40 generates the print data 108 in which predetermined information regarding the product, which is included in the product information, is arranged at a predetermined position. Note that the print data generation module 40 is an example of generation means.

Specifically, first, an operator operates the handy scanner 32 to read the product code from the code symbol (e.g., barcode) printed on a product to which the label 50 is to be attached. The print data generation module 40 searches the PLU file 107 for the product information corresponding to the product code read by the handy scanner 32. The print data generation module 40 reads, from the PLU file 107, the product information corresponding to the read product code. The print data generation module 40 generates the print data 108 necessary for performing printing of the label 50 on the basis of the read product information. The print data 108 is data in which product information to be printed on the label 50 is arranged in a predetermined format set in advance. The print data 108 includes, for example, information on items to be described later such as the product name, the processing date, the expiration date, and the price.

Note that the content of the PLU file 107 is periodically updated. Therefore, there is the product information corresponding to the product code read by the handy scanner 32 in the PLU file 107. However, there is no product information corresponding to the product code read by the handy scanner 32 in the PLU file 107 due to delay of the above-mentioned updating or the like in some cases. In this case, the print data generation module 40 communicates with the store-server 20 via the network 30. The print data generation module 40 refers to the PLU file 207 recorded in the memory device 205 (see Fig. 3) of the store-server 20. The print data generation module 40 refers to the PLU file 207, and thereby reads, from the PLU file 207, the product information corresponding to the product code read by the handy scanner 32.

The print data memory module 41 records, in the memory device 105 for each product code, the print data 108 that is generated by the print data generation module 40 and checked to be free of problems as will be described later. Note that the print data memory module 41 is an example of memory means.

The change detection module 42 detects an item that is changed (differs) between the print data 108 (newly-generated print data 108) generated by the print data generation module 40 and the print data 108 (previously-generated print data 108), which is recorded in the memory device 105, of the product corresponding to the same product code of that of the above-mentioned new print data 108, i.e., an item of a changed attribution among attributions of the product to be described later. In other words, the change detection module 42 detects, when the print data generation module 40 newly generates the print data 108, a changed item (item of a changed attribution among attributions of the product to be described alter) of the newly-generated print data 108 with respect to the previously-generated print data 108 under the condition that the previously-generated print data 108 of the product corresponding to the same product code as that of the product of the newly-generated print data 108 is recorded in the memory device 105. Note that the change detection module 42 is an example of detection means.

The change highlighting module 43 displays, on the display device 13, a printing image of the label 50 based on the print data 108 (new print data 108) generated by the print data generation module 40. Further, the change highlighting module 43 highlights the item of the new print data 108, which is detected by the change detection module 42. Note that the change highlighting module 43 is an example of highlight means.

The notification module 44 performs, when the print data generation module 40 generates the print data 108 (new print data 108), notification under the condition that the print data 108 (previous print data 108) of the product corresponding to the same product code as that of the product of the new print data 108 is not recorded in the memory device 105. Note that the notification module 44 is an example of notification means.

The operation control module 45 controls the touchscreen 14, and accepts various operations on the label printer 10. Note that the operation control module 45 may accept various operations on the label printer 10 by detecting that not the touchscreen 14 but operation buttons (not shown) or the like of the label printer 10 are operated.

The display control module 46 controls the display state of the display device 13.

The print control module 47 controls printing of the label 50 executed by the print device 110.

The communication control module 48 causes the communication interface 111 to perform communication between the label printer 10 and the store-server 20.

### (Description of Structure of Print Data)

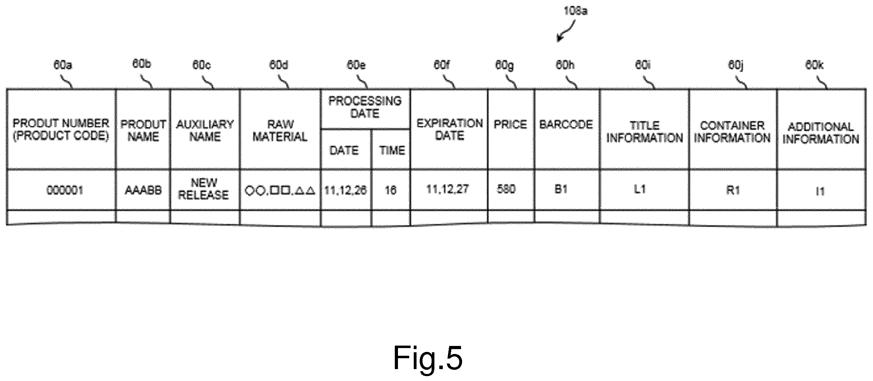

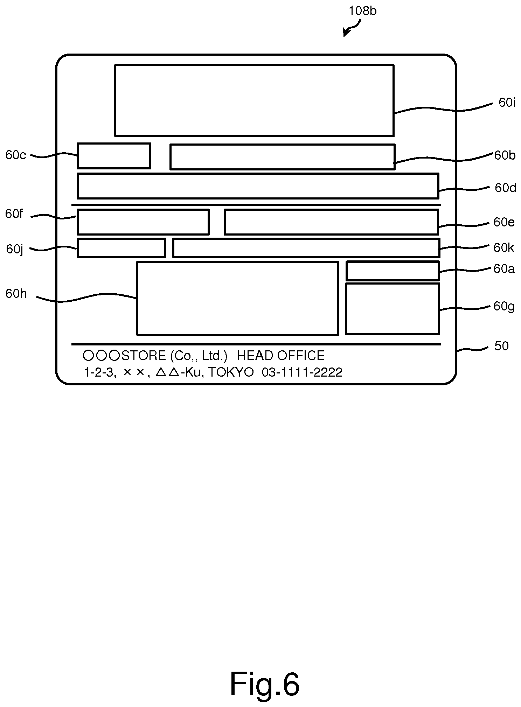

Next, a structure of the print data 108 will be described. As described above, the print data 108 includes the text data 108a and the layout data 108b (see Fig. 2). Fig. 5 is a diagram showing an example of a configuration of the text data 108a among the print data 108. In the text data 108a, predetermined data regarding an attribution of a product is arranged in each item. Further, Fig. 6 is a diagram showing an example of a configuration of the layout data 108b of the print data 108.

As shown in Fig. 5, the text data 108a includes a plurality of items representing attributions of a product. Specifically, the text data 108a includes a product number 60a, a product name 60b, an auxiliary name 60c, a raw material 60d, a processing date 60e, an expiration date 60f, a price 60g, a barcode 60h, a title information 60i, a container information 60j, and an additional information 60k. Note that in the following description, an item representing an attribution of a product is referred to simply as the attribution item in some cases. The attribution items each correspond to the attribution item detected by the above-mentioned change detection module 42. Note that the attribution item is not limited to the content shown in Fig. 5, and another attribution item may be appropriately added or canceled.

The product number 60a is information that represents a product code of a product.

The product name 60b is information that represents a product name of a product.

The auxiliary name 60c represents auxiliary information added to a product. For example, the auxiliary name 60c is information such as "new release", "limited time", and "limited area".

The raw material 60d is information that represents a raw material of a product.

The processing date 60e is information that represents the processing date, the cooking date, or the manufacturing date of a product. The processing date 60e is recorded separately for date and time as shown in Fig. 5.

The expiration date 60f is information that represents the expiration date of a product. Note that instead of the expiration date, the best-before date may be represented depending on the product.

The price 60g is information that represents the price of a product.

The barcode 60h is code information that includes the product number 60a and the like of a product. Note that as shown in Fig. 5, the barcode 60h is recorded as an identification number B 1. The actual barcode 60h corresponding to the identification number B1 is recorded as, for example, image data separately from the text data 108a.

The title information 60i is information that represents a title character or the like to be printed on the label 50. Note that the title information 60i is information for identifying one of a plurality of titles determined in advance. Therefore, as shown in Fig. 5, the title information 60i is recorded as an identification number L1 for uniquely identifying one of the plurality of titles. The actual title information 60i corresponding to the identification number L1 is recorded as, for example, image data separately from the text data 108a.

The container information 60j represents information regarding a container in which a product is placed. The container information 60j includes a symbol or the like that represents a material of the container. Note that the container information 60j is information for identifying one of a plurality of containers determined in advance. Therefore, as shown in Fig. 5, the container information 60j is recorded as an identification number R1 for uniquely identifying one of the plurality of containers. The actual container information 60j corresponding to the identification number R1 is recorded as, for example, image data separately from the text data 108a.

The additional information 60k represents additional information of a product. The additional information 60k of a product includes, for example, notes or the like regarding handling of the product. Note that the additional information 60k is information for identifying one of a plurality of pieces of additional information determined in advance. Therefore, as shown in Fig. 5, the additional information 60k of a product is recorded as an identification number I1 for uniquely identifying one of the plurality of pieces of additional information. The actual additional information 60k corresponding to the identification number I1 is recorded as, for example, text data separately from the text data 108a.

As shown in Fig. 6, the layout data 108b is information that represents where information on each attribution item included in the text data 108a is to be placed (printed) in the label 50.

The layout data 108b is data that represents the arrangement (print) position of each attribution item (the product number 60a to the additional information 60k) when printing the text data 108a on the label 50. The text data 108a is recorded as, for example, image data. The layout data 108b includes a coordinate position (e.g., upper left coordinate position of a rectangular area) at which each attribution item of the text data 108a is arranged. Note that the layout data 108b is not limited to one type of layout data, and a plurality of types of different layout data 108b are recorded. Although not shown in Fig. 5, to each text data 108a, a label that uniquely identifies the corresponding layout data 108b is added. The label described here is a keyword such as an identification number for associating the text data 108a and the layout data 108b with each other.

### (Description of Method of Detecting Change)

Next, the above-mentioned method of detecting the changed attribution item in the print data 108 executed by the change detection module 42 will be described. As described above, the change detection module 42 detects an attribution item that differs between the new print data 108 generated by the print data generation module 40 and the previously-generated print data 108 of the product corresponding to the same product code as that of the new print data 108. Specifically, the change detection module 42 detects an attribution item that differs between the text data 108a of the new print data 108 and the text data 108a of the previously-generated print data 108.

The content of each attribution item (the product name 60b to the additional information 60k) included in the text data 108a is changed in some cases depending on the time and date or the like even when the product number (product code) 60a of the product is the same. The change detection module 42 compares the content of the generated text data 108a and the content of the previously-generated text data 108a that includes the same product number 60a as that of the text data 108a and is recorded in the memory device 105 every time the print data generation module 40 newly generates the text data 108a. Specifically, the change detection module 42 compares the content of the same attribution items (the product name 60b to the additional information 60k) of the newly-generated text data 108a and the previously-generated text data 108a.

The change detection module 42 detects a changed attribution item by comparing the text data 108a. Note that the detection of the attribution items with the change may be performed by comparing the product information on which the text data 108a is based. In this case, it is necessary to store the product information that was source of the previous print data 108 (the text data 108a) generated previously. Also, the attribution items (the barcode 60h to the additional information 60k) in which labels (the above-mentioned identification numbers B1, L1, R1, and I1) are recorded are not data to be actually printed, and the presence/absence of the change is detected by comparing the above-mentioned identification numbers. The change detection module 42 transmits names of all the detected attribution items to the change highlighting module 43.

### (Description of Method of Highlighting Change)

Next, the above-mentioned method of highlighting the changed attribution item by the change highlighting module 43 will be described.

The change highlighting module 43 arranges the corresponding text data 108a at a predetermined position (predetermined position corresponding to each attribution item) of the layout data 108b generated by the print data generation module 40. The change highlighting module 43 changes the method of displaying the attribution item corresponding to the change detected by the change detection module 42 after arranging the text data 108a.

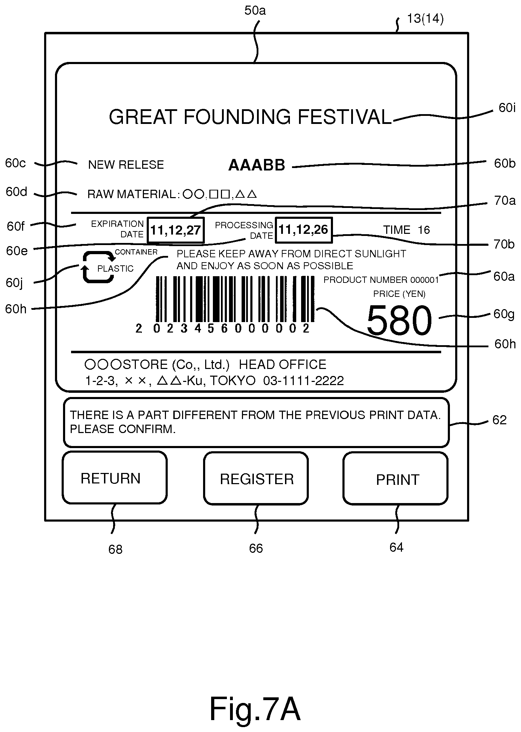

For example, the change highlighting module 43 highlights the changed attribution item by superimposing a rectangular frame on the attribution item and displaying them. Specifically, as shown in Fig. 7A, the change highlighting module 43 superimposes rectangular frames 70a and 70b as highlighting at the positions corresponding to the changed attribution items, and displays them.

Note that the method of highlighting the changed attribution item is not limited to the superimposition of a rectangular frame. Specifically, the change highlighting module 43 may change the display color of the changed attribution item to highlight the attribution item. Further, the change highlighting module 43 may enlarge the display size of the changed attribution item to highlight the attribution item.

### (Description of Display Example of Label Printer)

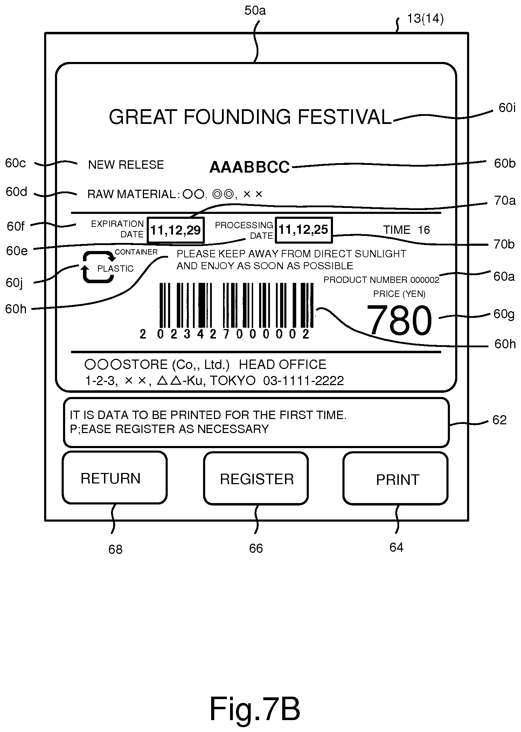

Next, an example of display content that the display control module 46 causes the display device 13 of the label printer 10 to display before printing the label 50 will be described with reference to Fig. 7A and Fig. 7B. In particular, Fig. 7A shows a display example of the display device 13 in the case where the change detection module 42 detects a change. Fig. 7B shows a display example of the display device 13 in the case where the text data 108a having the same product number 60a as that of the text data 108a generated by the print data generation module 40 is not recorded in the memory device 105 by the print data memory module 41. An operator of the label printer 10 checks the display content shown in Fig. 7A or Fig. 7B. The operator causes the label printer 10 to execute a predetermined operation by operating operation buttons 64, 66, and 68 displayed on the display device 13 after checking the display content.

As shown in Fig. 7A, the display control module 46 (see Fig. 4) of the label printer 10 displays a label 50a (print image of the label 50) and a message window 62 on the display device 13 (or the touchscreen 14) of the label printer 10. Further, the display control module 46 displays a print button 64, a registration button 66, and a return button 68 as operations buttons.

The labels 50a and 50b respectively shown in Fig. 7A and Fig. 7B each represent the state of the label in the case where the print data 108 generated by the print data generation module 40 (see Fig. 4) is to be printed by the print device 110. In other words, the display control module 46 pre-displays, on the display device 13, the label 50a in the case where the print data 108 generated by the print data generation module 40 (see Fig. 4) is to be printed. In the label 50a, information (the text data 108a) corresponding to the above-mentioned attribution items 60a to 60k (see Fig. 5) such as a product number is arranged at a predetermined position according to the layout data 108b (see Fig. 6).

Note that in Fig. 7A, the processing date 60e and the expiration date 60f represent a display example of the label 50a in the case where the change detection module 42 compares with the previous print data 108 (the text data 108a) in which the product number 60a is "000001", which is recorded in the memory device 105 by the print data memory module 41 and detects that there is a change from the previous print data 108 (the text data 108a) in which the product number 60a is "000001". In other words, in the case where the change detection module 42 detects that there is a change in the attribution items of the processing date 60e and the expiration date 60f, the change highlighting module 43 superimposes the rectangular frames 70a and 70b on the date parts of the processing date 60e and the expiration date 60f to highlight them. Accordingly, the attribution items of the processing date 60e and the expiration date 60f are highlighted as changed attribution items.

The display control module 46 displays a message for the operator of the label printer 10 on the message window 62. In the example shown in Fig. 7A, since there is a changed attribution item, a message for prompting the operator to check the content of the attribution item, e.g., a message such as "There is a part different from the previous print data. Please confirm.", is displayed on the message window 62.

The print button 64 is a button, which receives a pressing operation by the operator, for instructing the label printer 10 to print the print data 108 of the label 50a displayed on the display device 13. In other words, the operation control module 45 detects that the print button 64 is pressed by the operator. The print control module 47 causes, when the operation control module 45 detects that the print button 64 is pressed by the operator, the print device 110 to perform printing for issuing the label 50 based on the print data 108 of the label 50a (print image of the label 50). Note that the print data 108 does not include the rectangular frames 70a and 70b superimposed on the processing date 60e and the expiration date 60f in the example of Fig. 7A. Accordingly, print device 110 does not print the rectangular frames 70a and 70b when executing printing of the label 50a.

The registration button 66 is a button, which receives a pressing operation by the operator, for instructing the label printer 10 to register the print data 108 of the label 50a displayed on the display device 13. In other words, the operation control module 45 detects that the registration button 66 is pressed by the operator. The print data memory module 41 causes, when the operation control module 45 detects that the print button 64 is pressed by the operator, the memory device 105 to record the print data 108 of the label 50a.

The return button 68 is a button, which receives a pressing operation by the operator, for instructing to return the label 50a displayed on the display device 13 to the state in which the label 50a of the previous product is displayed. In other words, the operation control module 45 detects that the return button 68 is pressed by the operator. The display control module 46 displays, when the operation control module 45 detects that the print button 64 is pressed by the operator, the label 50a of the print data 108 of the previous product on the display device 13.

Fig. 7B shows a display example of a label 50b (print image of the label 50) by the display device 13 in the case where the previously-generated print data 108 having the same product number 60a (product number "000002") as that of the print data 108 generated by the print data generation module 40 is not recorded in the memory device 105.

In the case of Fig. 7B, the notification module 44 transmits, to the display control module 46, instruction for causing displaying a notification message on the message window 62. The above-mentioned notification message represents that the print data 108 of the label 50b displayed on the display device 13 is data of the product number to be printed for the first time, and includes a message for prompting the operator to register the print data 108 of the label 50b as necessary. The display control module 46 causes the display device 13 to display a notification message such as "It is data to be printed for the first time. Please register as necessary." on the message window 62.

Note that also in the case where the label 50a or 50b are displayed on the touchscreen 14, the functions of the print button 64, the registration button 66, and the return button 68 are as described above. In the case where the label printer 10 executes printing according to the label 50b in the display state of the display device 13 shown in Fig. 7B, the operator of the label printer 10 checks whether or not there is a problem for all the attribution items of the label 50b.

### (Description of Flow of Processing Executed by Label Printer)

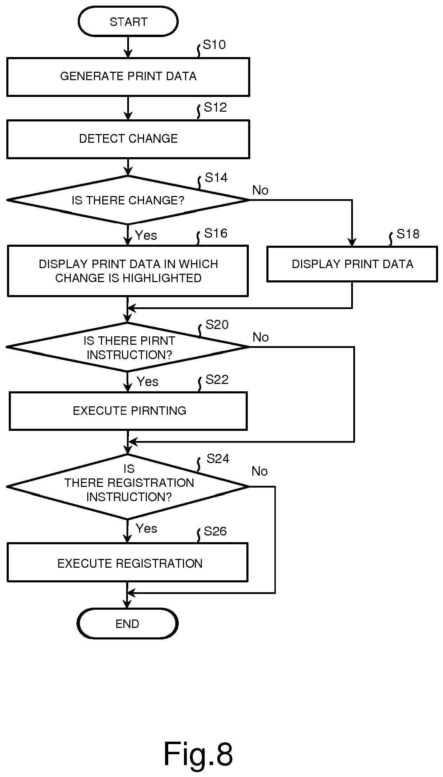

Next, the processing executed by the controller 100 of the label printer 10 will be described. Fig. 8 is a flowchart showing an example of flow of a series of processing executed by the controller 100 of the label printer 10 of this embodiment.

As shown in Fig. 8, in Step S10, the print data generation module 40 generates the print data 108 (the text data 108a and the layout data 108b).

In Step S12, the change detection module 42 detects a change (changed attribution item) in the print data 108 (the print data 108 generated in Step S108) generated by the print data generation module 40 this time. In other words, the change detection module 42 detects an attribution item that differs between the print data 108 generated this time and the print data 108, which is recorded in the memory device 105, of the product corresponding to the same product code as that of the print data 108 generated this time.

In Step S14, the change detection module 42 determines presence/absence of a change (changed attribution item). In the case where it is determined that there is a changed attribution item (Step S14: Yes), the processing of the controller 100 proceeds to Step S16. In Step S16, the change highlighting module 43 performs processing of highlighting the changed attribution item in the print data 108. In other words, the change highlighting module 43 superimposes the rectangular frames 70a and 70b at the positions of the changed attribution items to highlight the changed attribution items in the print data 108. Further, in Step S16, the display control module 46 displays, on the display device 13, the label 50a or 50b (print image) based on the print data 108 in which the highlighting processing is executed on the above-mentioned changed attribution item by the change highlighting module 43. When the print data 108 in which the highlighting processing is executed on the changed attribution item is displayed on the display device 13, the processing of the controller 100 proceeds to Step S20. Meanwhile, in the case where it is not determined that there is a changed attribution item (Step S14: No), the processing of the controller 100 proceeds to Step S18. In Step S18, the display control module 46 displays, on the display device 13, the above-mentioned print data 108 (the print data 108 generated in Step S10) generated this time. When the above-mentioned print data 108 generated this time is displayed on the display device 13, the processing of the controller 100 proceeds to Step S20.

In Step S20, the operation control module 45 determines whether or not there is a print instruction of the print data 108 by the operator. In the case where it is determined that there is a print instruction (StepS20: Yes), the processing of the controller 100 proceeds to step S22. In Step S22, the operation control module 45 transmits an instruction for printing to the print control module 47. The print control module 47 causes the print device 110 to perform printing based on the print data 108. When the print device 110 executes printing of the print data 108, the processing of the controller 100 proceeds to Step S24. Meanwhile, in the case where it is not determined that there is a print instruction (Step S20: No), the processing of the controller 100 proceeds to Step S24.

In Step S24, the operation control module 45 determines whether or not there is a registration instruction of the print data 108 by the operator. In the case where it is determined that there is a registration instruction (Step S24: Yes), the processing of the controller 100 proceeds to Step S26. In Step S26, the operation control module 45 transmits, to the print data memory module 41, an instruction for registering the print data 108. The print data memory module 41 causes the memory device 105 to record (register) the print data 108. When the print data 108 is registered in the memory device 105, the processing of the controller 100 shown in Fig. 8 is finished. Meanwhile, in the case where it is not determined that there is a registration instruction (Step S24: No), the processing of the controller 100 shown in Fig. 8 is finished.

As described above, according to the label printer 10 (printer) of this embodiment, the change detection module 42 (detection means) detects a changed attribution item in the print data 108 for the label 50 generated by the print data generation module 40 (generation means). In other words, the change detection module 42 detects a changed attribution item in the generated print data 108 between the generated print data 108 and the print data 108, which is recorded (registered) in the memory device 105 by the print data memory module 41 (memory means), of the product corresponding to the same product number 60a (product code) as that of the generated print data 108. The change highlighting module 43 (highlight means) executes processing of highlighting the attribution item detected by the change detection module 42 in the generated print data 108. The display control module 46 displays, on the display device 13, the above-mentioned print data 108 on which highlight processing is performed by the change highlighting module 43. Therefore, a changed attribution item in the generated print data 108 for the label 50 with respect to the print data 108 (the print data 108 recorded in the memory device 105) for the label 50 printed in the past is highlighted. Therefore, the operator is capable of easily checking the label 50 in a short time before executing printing.

Further, according to the label printer 10 of this embodiment, the print data memory module 41 is capable of causing, by receiving an instruction from the operator, the memory device 105 to record (register), for the product corresponding to each product number 60a (product code), the print data 108 for the label 50 generated for the first time by the print data generation module 40. Therefore, the label printer 10 is capable of reliably recording the print data 108 of the product corresponding to the product code printed once.

Further, according to the label printer 10 of this embodiment, the print data memory module 41 causes, by receiving an instruction from the operator, the memory device 105 to record, for the product corresponding to each product number 60a, the print data 108 for the label 50 generated most recently by the print data generation module 40. Therefore, the label printer 10 is capable of reliably recording the print data 108 of the product corresponding to the product code printed once. In particular, in the case where a major change such as a change in the product name 60b or the auxiliary name 60c occurs for the product corresponding to the same product number 60a (product code) and the changes are maintained thereafter, the label printer 10 is capable of recording the print data 108 of the time when the above-mentioned major changes occurs. Therefore, it is possible to reduce the number of changes (changed attribution items) in the print data 108 to be generated with respect to the print data 108 printed in the past. In other words, it is possible to suppress the increase in the time necessary for checking the print data 108 to be printed.

Further, according to the label printer 10 of this embodiment, the change detection module 42 detects a changed attribution item by comparing information to be arranged on each attribution item of the print data 108 for the label 50. Therefore, the label printer 10 is capable of easily detecting a changed attribution item in the generated print data 108 by simple calculation processing.

Further, according to the label printer 10 of this embodiment, the notification module 44 (notification means) performs, when the print data generation module 40 generates the print data 108, notification under the condition that the print data 108 having the same product number 60a as that of the print data 108 is not recorded in the memory device 105 by the print data memory module 41. Therefore, the label printer 10 is capable of warning that it is necessary to carefully perform checking before printing for the label 50 to be printed for the first time.

For example, the control program P1 to be executed by the label printer 10 and the control program P2 to be executed by the store-server 20 may be recorded respectively in the memory devices 105 and 205 in advance and provided, or recorded in an installable format file or an executable format file in a computer readable recording medium such as a CD-ROM, a flexible disk (FD), a CD-R, and a DVD (Digital Versatile Disk) and provided. Further, the control programs P1 and P2 may be recorded in a computer connected to a network, downloaded via the network, and provided. Further, the control programs P1 and P2 may be provided or distributed via a network such as the Internet.

## Claims

1. A printer (10) that performs printing on a printable medium to be attached to a product, comprising
a top cover (11) and a main cover (12);
a handy scanner (32) that reads identification information uniquely identifying the product on which the medium is to be attached;
a memory (105) that records a product information file (107) that records, for each piece of the identification information, product information including a plurality of pieces of data of a plurality of attribution items each representing an attribution of the product, wherein the memory is configured to record print data in association with the identification information printed in the past by the printer (10), the plurality of pieces of data of the plurality of attribution items being arranged at predetermined positions in the print data;
a printer mechanism (110) provided in the main cover (12) that prints the product information of the product identified by the read identification information, on the printable medium on the basis of the print data;
a display (13) provided on the top cover (11) that displays a print image of the printable medium where the product information is to be printed by the printer mechanism;
a controller (100) that
reads, where the identification information is read by the handy scanner (32), the product information from the product information file (107) in the memory on the basis of the identification information,
generates print data (108) in which the plurality of pieces of data included in the read product information are arranged at predetermined positions,
detects an attribution item that differs between the generated print data and the print data that is recorded in the memory in association with the read identification information, and
displays the print image on the display on the basis of the generated print data in such a way that the detected attribution item is highlighted.

2. The printer according to claim 1, wherein
the controller records, where the print data is generated for the first time for the product identified by the identification information, the generated print data in the memory.

3. The printer according to claim 1 or 2, wherein
the controller records, where no print data is recorded in the memory in association with the input identification information, the generated print data in the memory.

4. The printer according to any one of claims 1 to 3, wherein
the controller records, for the product identified by the identification information, the print data that is generated most recently.

5. The printer according to any one of claims 1 to 4, wherein
the controller records, where the controller detects the attribution item that differs between the generated print data and the print data that is recorded in the memory in association with the input identification information, the generated print data in the memory.

6. The printer according to any one of claims 1 to 5, wherein
the controller further detects the attribution item that differs by comparing data of the attribution item of the generated print data and data of the attribution item of the print data that is recorded in the memory.

7. The printer according to any one of claims 1 to 6, wherein
the controller performs, where no print data is recorded in the memory in association with the input identification information, notification that the print data is generated for the first time.

8. The printer according to any one of claims 1 to 7, wherein
the controller displays, where no print data is recorded in the memory in association with the input identification information, a message and the print image on the display, the message representing that the print data is generated for the first time.

9. The printer according to any one of claims 1 to 8, wherein
the controller displays, where the controller detects an attribution item that differs between the generated print data and the print data that is recorded in the memory in association with the input identification information, a message and the print image on the display, the message representing that there is the difference in the attribution item.

10. A method of controlling a printer (10), wherein the printer (10) includes:
a top cover (11) and a main cover (12);
a handy scanner (32) that reads identification information uniquely identifying the product on which the medium is to be attached;
a memory (105) including a product information file (107) that records, for each piece of the identification information, product information including a plurality of pieces of data of a plurality of attribution items each representing an attribution of the product, wherein the memory is configured to record print data in association with the identification information printed in the past by the printer (10), the plurality of pieces of data of the plurality of attribution items being arranged at predetermined positions in the print data;
a printer mechanism (110) provided in the main cover (12) that prints the product information of the product identified by the read identification information, on a printable medium to be attached to the product on the basis of the print data; and
a display (13) provided on the top cover (11) that displays a print image of the printable medium where the product information is to be printed by the printer mechanism,
the control method comprising the steps of:
reading, where the identification information is ready via the handy scanner (32), the product information from the product information file (107) in the memory on the basis of the identification information;
generating print data (108) in which the plurality of pieces of data included in the read product information are arranged at predetermined positions;
detecting an attribution item that differs between the generated print data and the print data that is recorded in the memory in association with the read identification information; and
displaying the print image on the display on the basis of the generated print data in such a way that the detected attribution item is highlighted.

11. A non-transitory computer readable medium storing a program comprising instructions that when executed cause the printer of claim 1 to execute the steps of the method of claim 10.

## Patentansprüche

1. Drucker (10), der einen Druckvorgang an einem an einem Produkt anzubringenden bedruckbaren Medium ausführt, umfassend:
eine obere Abdeckung (11) und eine Hauptabdeckung (12);
einen Handscanner (32), der Identifizierungsinformationen abliest, die das Produkt, an dem das Medium anzubringen ist, eindeutig identifizieren;
einen Speicher (105), der eine Produktinformationsdatei (107) aufzeichnet, die für jede Identifizierungsinformation Produktinformationen aufzeichnet, die eine Vielzahl Daten einer Vielzahl jeweils eine Zuordnung des Produktes darstellender Zuordnungselemente umfassen,
wobei der Speicher derart konfiguriert ist, dass er mit den in Vergangenheit durch den Drucker (10) gedruckten Identifizierungsinformationen zusammenhängende Druckdaten aufzeichnet, wobei die Vielzahl Daten der Vielzahl Zuordnungselemente an vorgegebenen Stellen in den Druckdaten angeordnet sind;
einen in der Hauptabdeckung (12) vorgesehenen Druckermechanismus (110), der anhand der Druckdaten die Produktionformationen des durch die abgelesenen Identifizierungsinformationen identifizierten Produktes auf dem bedruckbaren Medium druckt;
eine auf der oberen Abdeckung (11) vorgesehene Anzeige (13), die ein Druckbild des bedruckbaren Mediums, auf dem die Produktionformationen vom Druckermechanismus zu drucken sind, anzeigt;
eine Steuerung (100), die, sofern die Identifizierungsinformationen vom Handscanner (32) abgelesen werden, die Produktinformationen aus der Datei (107) im Speicher anhand der Identifizierungsinformationen abliest,
Druckdaten (108) erzeugt, in denen die in den abgelesenen Produktionformationen enthaltene Vielzahl Daten an vorgegebenen Stellen angeordnet ist,
ein Zuordnungselement erkennt, das sich zwischen den erzeugten Druckdaten und den im Speicher im Zusammenhang mit den abgelesenen Identifizerungsdaten aufgezeichneten unterscheidet,
das Druckbild anhand der erzeugten Druckdaten auf der Anzeige derart anzeigt, dass das erkannte Zuordnungselement hervorgehoben wird.

2. Drucker nach Anspruch 1, wobei
die Steuerung die erzeugten Druckdaten im Speicher aufzeichnet, sofern die Druckdaten erstmals für das von den Identifizierungsinformationen identifizierte Produkt erzeugt werden.

3. Drucker nach Anspruch 1 oder 2, wobei
die Steuerung die erzeugten Druckdaten im Speicher aufzeichnet, sofern im Zusammenhang mit den eingegebenen Identifizierungsinformationen keine Druckdaten im Speicher aufgezeichnet sind.

4. Drucker nach einem der Ansprüche 1 - 3, wobei
die Steuerung die für das von den Identifizierungsinformationen identifizierte Produkt zuletzt erzeugten Druckdaten aufzeichnet.

5. Drucker nach einem der Ansprüche 1 - 4, wobei
die Steuerung die erzeugten Druckdaten im Speicher aufzeichnet, sofern die Steuerung das Zuordnungselement erkennt, das sich zwischen den erzeugten Druckdaten und den im Zusammenhang mit den eingegebenen Identifizierungsinformationen im Speicher aufgezeichneten Druckdaten unterscheidet.

6. Drucker nach einem der Ansprüche 1 - 5, wobei
die Steuerung ferner das sich unterscheidende Zuordnungselement dadurch erkennt, dass sie Daten des Zuordnungselements der erzeugten Druckdaten und Daten des Zuordnungselements der im Speicher aufgezeichneten Druckdaten vergleicht.

7. Drucker nach einem der Ansprüche 1 - 6, wobei
die Steuerung die erzeugten Druckdaten im Speicher eine Meldung abgibt, dass die Druckdaten erstmals erzeugt werden, sofern im Zusammenhang mit den eingegebenen Identifizierungsinformationen keine Druckdaten im Speicher aufgezeichnet sind.

8. Drucker nach einem der Ansprüche 1 - 7, wobei
die Steuerung die erzeugten Druckdaten im Speicher eine Meldung und das Druckbild auf der Anzeige anzeigt, sofern im Zusammenhang mit den eingegebenen Identifizierungsinformationen keine Druckdaten im Speicher aufgezeichnet sind, wobei aus der Meldung hervorgeht, dass die Druckdaten erstmals erzeugt werden.

9. Drucker nach einem der Ansprüche 1 - 8, wobei
die Steuerung eine Meldung und das Druckbild auf der Anzeige anzeigt, sofern die Steuerung ein Zuordnungselement erkennt, das sich zwischen den erzeugten Druckdaten und den im Zusammenhang mit den eingegebenen Identifizierungsinformationen im Speicher aufgezeichneten Druckdaten unterscheidet, wobei aus der Meldung hervorgeht, dass beim Zuordnungselement ein Unterschied vorliegt.

10. Verfahren zur Steuerung eines Druckers (10), wobei der Drucker (10) umfasst:
eine obere Abdeckung (11) und eine Hauptabdeckung (12);
einen Handscanner, der Identifizierungsinformationen abliest, die das Produkt, an dem das Medium anzubringen ist, eindeutig identifizieren;
einen Speicher (105), der eine Produktinformationsdatei (107) enthält, die für jede Identifizierungsinformation Produktinformationen aufzeichnet, die eine Vielzahl Daten einer Vielzahl jeweils eine Zuordnung des Produktes darstellender Zuordnungselemente umfassen, wobei der Speicher derart konfiguriert ist, dass er mit den in Vergangenheit durch den Drucker (10) gedruckten Identifizierungsinformationen zusammenhängende Druckdaten aufzeichnet,
wobei die Vielzahl Daten der Vielzahl Zuordnungselemente an vorgegebenen Stellen in den Druckdaten angeordnet sind;
einen in der Hauptabdeckung (12) vorgesehenen Druckermechanismus (110), der anhand der Druckdaten die Produktionformationen des durch die abgelesenen Identifizierungsinformationen identifizierten Produktes auf einem am Produkt anzubringenden bedruckbaren Medium druckt und
eine auf der oberen Abdeckung (11) vorgesehene Anzeige (13), die ein Druckbild des bedruckbaren Mediums, auf dem die Produktionformationen vom Druckermechanismus zu drucken sind, anzeigt,
wobei das Steuerungsverfahren die Schritte umfasst:
Ablesen der Produktinformationen aus der Datei (107) im Speicher anhand der Identifizierungsinformationen, sofern die Identifizierungsinformationen vom Handscanner (32) abgelesen werden,
Erzeugen von Druckdaten (108), in denen die in den abgelesenen Produktionformationen enthaltene Vielzahl Daten an vorgegebenen Stellen angeordnet ist,
Erkennen eines Zuordnungselements, das sich zwischen den erzeugten Druckdaten und den im Speicher im Zusammenhang mit den abgelesenen Identifizerungsdaten aufgezeichneten unterscheidet, und
Anzeigen des Druckbildes anhand der erzeugten Druckdaten auf der Anzeige derart anzeigt, dass das erkannte Zuordnungselement hervorgehoben wird.

11. Nicht flüchtiger computerlesbarer Datenträger, auf dem ein Programm gespeichert ist, das Befehle umfasst, die bei Ausführung den Drucker nach Anspruch 1 dazu veranlassen, die Schritte des Verfahrens nach Anspruch 10 auszuführen.

## Revendications

1. Imprimante (10) qui met en oeuvre une impression sur un support imprimable destiné à être fixé à un produit, comprenant :
un couvercle supérieur (11) et un couvercle principal (12) ;
un scanneur manuel (32) qui lit des informations d'identification identifiant de manière unique le produit sur lequel le support doit être fixé ;
une mémoire (105) qui enregistre un fichier d'informations de produit (107) qui enregistre, pour chaque élément des informations d'identification, des informations de produit incluant une pluralité d'éléments de données d'une pluralité d'articles d'attribution représentant chacun une attribution du produit, dans lequel la mémoire est configurée de manière à enregistrer des données d'impression en association avec les informations d'identification imprimées dans le passé par l'imprimante (10), les éléments de la pluralité d'éléments de données de la pluralité d'articles d'attribution étant agencés à des positions prédéterminées dans les données d'impression ;
un mécanisme d'imprimante (110) fourni dans le couvercle principal (12), lequel imprime les informations de produit du produit identifié par les informations d'identification lues, sur le support imprimable, sur la base des données d'impression ;
un écran d'affichage (13) fourni sur le couvercle supérieur (11), lequel affiche une image d'impression du support imprimable là où les informations de produit doivent être imprimées par le mécanisme d'imprimante ;
un contrôleur (100) qui
lit, lorsque les informations d'identification sont lues par le scanneur manuel (32), les informations de produit, à partir du fichier d'informations de produit (107) dans la mémoire, sur la base des informations d'identification ;
génère des données d'impression (108) dans lesquelles les éléments de la pluralité d'éléments de données inclus dans les informations de produit lues sont agencés à des positions prédéterminées ;
détecte un article d'attribution qui diffère entre les données d'impression générées et les données d'impression qui sont enregistrées dans la mémoire en association avec les informations d'identification lues ; et
affiche l'image d'impression sur l'écran d'affichage, sur la base des données d'impression générées, de telle manière que l'article d'attribution détecté est mis en évidence.

2. Imprimante selon la revendication 1, dans laquelle :
le contrôleur enregistre, lorsque les données d'impression sont générées pour la première fois pour le produit identifié par les informations d'identification, les données d'impression générées dans la mémoire.

3. Imprimante selon la revendication 1 ou 2, dans laquelle :
le contrôleur enregistre, lorsqu'aucune donnée d'impression n'est enregistrée dans la mémoire en association avec les informations d'identification d'entrée, les données d'impression générées dans la mémoire.

4. Imprimante selon l'une quelconque des revendications 1 à 3, dans laquelle :
le contrôleur enregistre, pour le produit identifié par les informations d'identification, les données d'impression qui sont générées le plus récemment.

5. Imprimante selon l'une quelconque des revendications 1 à 4, dans laquelle :
le contrôleur enregistre, lorsque le contrôleur détecte l'article d'attribution qui diffère entre les données d'impression générées et les données d'impression qui sont enregistrées dans la mémoire en association avec les informations d'identification d'entrée, les données d'impression générées dans la mémoire.

6. Imprimante selon l'une quelconque des revendications 1 à 5, dans laquelle :
le contrôleur détecte en outre l'article d'attribution qui diffère, en comparant les données de l'article d'attribution des données d'impression générées et les données de l'article d'attribution des données d'impression qui sont enregistrées dans la mémoire.

7. Imprimante selon l'une quelconque des revendications 1 à 6, dans laquelle :
le contrôleur met en oeuvre, lorsqu'aucune donnée d'impression n'est enregistrée dans la mémoire en association avec les informations d'identification d'entrée, une notification indiquant que les données d'impression sont générées pour la première fois.

8. Imprimante selon l'une quelconque des revendications 1 à 7, dans laquelle :
le contrôleur affiche, lorsqu'aucune donnée d'impression n'est enregistrée dans la mémoire en association avec les informations d'identification d'entrée, un message, et l'image d'impression sur l'écran d'affichage, le message indiquant que les données d'impression sont générées pour la première fois.

9. Imprimante selon l'une quelconque des revendications 1 à 8, dans laquelle :
le contrôleur affiche, lorsque le contrôleur détecte un article d'attribution qui diffère entre les données d'impression générées et les données d'impression qui sont enregistrées dans la mémoire en association avec les informations d'identification d'entrée, un message, et l'image d'impression sur l'écran d'affichage, le message indiquant que la différence existe dans l'article d'attribution.

10. Procédé de commande d'une imprimante (10), dans lequel l'imprimante (10) inclut :
un couvercle supérieur (11) et un couvercle principal (12) ;
un scanneur manuel (32) qui lit des informations d'identification identifiant de manière unique le produit sur lequel le support doit être fixé ;
une mémoire (105) incluant un fichier d'informations de produit (107) qui enregistre, pour chaque élément des informations d'identification, des informations de produit incluant une pluralité d'éléments de données d'une pluralité d'articles d'attribution représentant chacun une attribution du produit, dans lequel la mémoire est configurée de manière à enregistrer des données d'impression en association avec les informations d'identification imprimées dans le passé par l'imprimante (10), les éléments de la pluralité d'éléments de données de la pluralité d'articles d'attribution étant agencés à des positions prédéterminées dans les données d'impression ;
un mécanisme d'imprimante (110) fourni dans le couvercle principal (12), lequel imprime les informations de produit du produit identifié par les informations d'identification lues, sur un support imprimable destiné à être fixé au produit, sur la base des données d'impression ; et
un écran d'affichage (13) fourni sur le couvercle supérieur (11), lequel affiche une image d'impression du support imprimable là où les informations de produit doivent être imprimées par le mécanisme d'imprimante ;
le procédé de commande comprenant les étapes ci-dessous consistant à :
lire, lorsque les informations d'identification sont lues, par le biais du scanneur manuel (32), les informations de produit, à partir du fichier d'informations de produit (107) dans la mémoire, sur la base des informations d'identification ;
générer des données d'impression (108) dans lesquelles les éléments de la pluralité d'éléments de données inclus dans les informations de produit lues sont agencés à des positions prédéterminées ;
détecter un article d'attribution qui diffère entre les données d'impression générées et les données d'impression qui sont enregistrées dans la mémoire en association avec les informations d'identification lues ; et
afficher l'image d'impression sur l'écran d'affichage, sur la base des données d'impression générées, de telle manière que l'article d'attribution détecté est mis en évidence.

11. Support non transitoire lisible par ordinateur stockant un programme comprenant des instructions qui, lorsqu'elles sont exécutées, amènent l'imprimante selon la revendication 1 à exécuter les étapes du procédé selon la revendication 10.
